# EUROPEAN PATENT APPLICATION

(11) **EP 4 418 793 A1**
(43) Date of publication of application: **21.08.2024**
(21) Application number: 23157434.4
(22) Date of filing: 20.02.2023
(51) Int. Cl.: H04W 72/54, H04W 24/02, H04W 36/00, H04W 64/00

(54) **METHOD AND SYSTEM FOR PREDICTION-BASED RADIO PARAMETERS BALANCING IN A WIRELESS COMMUNICATION SYSTEM**

(71) Applicant: Deutsche Telekom AG, 53113 Bonn (DE)
(72) Inventor: FRISCH, Andreas, 53757 Sankt Augustin (DE)
(74) Representative: Vossius & Partner Patentanwälte Rechtsanwälte mbB

(57) **Abstract**

A method for prediction-based radio parameters balancing in a wireless communication in a system, the system comprising a User Equipment, UE, and a radio access network, RAN, the UE comprising an application used or to be used by a user of the UE, the method comprising the steps of: sending, by the UE to the RAN, location information of the UE; sending, by the UE to the RAN, a request for a set of radio parameters required by the application; associating, by the RAN, the location information and the requested set of radio parameters with signal coverage prediction information of the area where the UE is located; providing, by the RAN, based on the above combined information, a transmission between the UE and the RAN that satisfies the required set of radio parameters by the application over the area where the UE is located; monitoring and updating, by the RAN, the location of the UE; determining, by the RAN, based on the above combined information including the updated location of the UE, whether a change of the transmission is necessary for satisfying the set of radio parameters required by the application; and when the RAN determines that a change of the transmission is necessary: changing the transmission to satisfy the required set of radio parameters by the application over the area where the UE is located.

## Description

The present invention generally relates to a method and a system for performing wireless communications. In particular, the invention relates to a method for prediction-based radio parameters balancing in a wireless communication in a system, and the corresponding system.

Currently, although an area might be provided with connectivity enabling mobile communication of a certain type, which typically results in a general assessment that the area is covered by "4G" or "5G" (in accordance with several performance parameters over the entire coverage area), in fact the level of performance in a specific spot within this coverage area may differ a lot.

The above-mentioned problem may be caused by a different number of factors influencing the local radio transmission on the specific spot such as: the terrain and shadowing effects by buildings or plants. In addition, some specific radio parameters such as interference and shared network effects may also influence the local radio transmission on the specific spot as well.

In the above-described scenario, a user (e.g., a User Equipment, UE) may require a specific set of radio parameters (e.g., minimum level of throughput, minimum network capacity, radio frequency layer, etc.) in order to guarantee a minimum required performance being required by the mobile application while moving through an area.

Typically, a User Equipment (UE) is connected within one specific (default) mode of the mobile communication layer and serviced within this mode, e.g., a 4G network within the 1800 MHz range.

Said UE is provided with a portion of the available network capacity which depends on the overall radio-parameters and the number of parallel users (shared resources). In many cases, alternative network layers are available in parallel as well and/or other network measures can be applied to handle performance in the transmission between a specific device and the network.

In view of the above, the network may not be able to provide the aforementioned exemplary user with the minimum required performance being required by the mobile application while moving through an area, even though the entire area is marked as "4G-covered" or "5G-covered" due to factual local coverage conditions.

In the above scenario, the user may face a situation where the application running on the UE works as expected at a specific spot, whereas, not far away from that spot, the service is degraded without any obvious reason from the user's perspective. This may be due to changing radio-conditions.

According to the current state of the art, changing radio-conditions are either:
- Standard handled → no countermeasures in the network to keep performance.. In this case, the performance of the user is just changing even with disappointing results for the user.
- Re-configured after termination of the service → for example, a switch to another system (e.g., 4G to 5G). If available, it takes place after the service has been terminated due to bad radio conditions.
- Balance of performance → The application itself tries to balance the performance via buffering, switch of codecs, etc. However, once network conditions get worse, the process of balancing the performance starts after degradation of connectivity already took place.

The above-mentioned problems may become important issues in some particular services, which are performed over a larger area with the need of a constant minimum data-transmission in order to achieve good results such as Smart Agriculture with related high-tech machinery or construction works with similar scenarios.

In view of the above, it is an object of the present invention to provide a method and a system for prediction-based radio parameters balancing in a wireless communication system that overcomes the afore-mentioned problems.

It is another object of the present invention to provide a user with a minimum required performance (as required by, for example, a mobile application) while moving over an entire area. In other words, providing a constant minimum data-transmission (as required, for example, by the mobile application) to the user over an entire area.

The above objects are achieved by the features of the independent claims. Preferred aspects are defined in the dependent claims.

According to an aspect of the invention, there is provided a method for prediction-based radio parameters balancing in a wireless communication system, the system comprising a User Equipment, UE, and a radio access network, RAN, the UE comprising an application used or to be used by a user of the U E.

The method comprising the steps of: sending, by the UE to the RAN, location information of the UE; sending, by the UE to the RAN, a request for a set of radio parameters required by the application; associating, by the RAN, the location information and the requested set of radio parameters with signal coverage prediction information of the area where the UE is located; providing, by the RAN, based on the above combined information, a transmission between the UE and the RAN that satisfies the required set of radio parameters by the application over the area where the UE is located; monitoring and updating, by the RAN, the location of the UE; determining, by the RAN, based on the above combined information including the updated location of the UE, whether a change of the transmission is necessary for satisfying the set of radio parameters required by the application; and when the RAN determines that a change of the transmission is necessary: changing the transmission to satisfy the required set of radio parameters by the application over the area where the UE is located.

Optionally, the method further comprises reverting, by the RAN, the changed transmission to the previous transmission once the RAN determines that the previous transmission configuration already satisfies the required set of radio parameters by the application over the area where the UE is located.

Optionally, the set of radio parameters required by the application comprises information indicating at least one of: minimum level of throughput; minimum network capacity; and/or radio frequency layer, that the application needs from the transmission for providing a minimum required performance.

Optionally, the minimum level of throughput and/or minimum network capacity is equal to X Mbit/s, wherein X is a positive rational number.

Optionally, determining whether a change of the transmission is necessary comprises determining, based on real-time location data of the UE and the signal coverage prediction information where the UE is located, that the UE is approaching a border of the area where the UE is located that has a decrease of performance which will fail to satisfy the required set of radio parameters that the application requires.

Optionally, determining whether a change of the transmission is necessary comprises: assuming, by the RAN, that the UE will move within a predefined area from the current UE location; and determining, by the RAN, based on the signal coverage prediction information where the UE is currently located, that within the predefined distance of the current UE location there will be an area with a decrease of performance which will fail to satisfy the required set of radio parameters that the application requires.

Optionally, determining whether a change of the transmission is necessary comprises: receiving, by the RAN from the UE, a message comprising predefined area information indicating an area where the UE plans to use the application; and determining, by the RAN, based on the signal coverage prediction information and the predefined area information, that within the predefined area there will be an area with a decrease of performance which will fail to satisfy the required set of radio parameters that the application requires.

Optionally, changing the transmission to satisfy the required set of radio parameters by the application over the area where the UE is located comprises at least one of: changing a communication technology of the transmission including 2G, 3G, 4G and/or 5G; and/or changing a spectrum layer of the transmission comprising: 700 MHz, 800 MHz, 900 MHz, 1800 MHz, 2100 MHz, 2600 MHz, 3500 MHz; and/or changing a resource allocation of the transmission.

According to an aspect of the invention, there is provided a wireless communication system for prediction-based radio parameters balancing, the system comprising a User Equipment, UE, and a radio access network, RAN, the UE comprising an application used or to be used by a user of the UE.

The UE is configured to: send, to the RAN, location information of the UE; and send, to the RAN, a request for a set of radio parameters required by the application.

The RAN is configured to: associate the location information and the requested set of radio parameters with signal coverage prediction information of the area where the UE is located; provide, based on the above combined information, a transmission between the UE and the RAN that satisfies the required set of radio parameters by the application over the area where the UE is located; monitor and update, the location of the UE; determine, based on the above combined information including the updated location of the UE, whether a change of the transmission is necessary for satisfying the set of radio parameters required by the application; and when the RAN determines that a change of the transmission is necessary, the RAN is further configured to: change the transmission to satisfy the required set of radio parameters by the application over the area where the UE is located.

Optionally, the RAN is further configured to: revert the changed transmission to the previous transmission once the RAN determines that the previous transmission configuration already satisfies the required set of radio parameters by the application over the area where the UE is located.

Optionally, the set of radio parameters required by the application comprises information indicating at least one of: minimum level of throughput; minimum network capacity; and/or radio frequency layer, that the application needs from the transmission for providing a minimum required performance, preferably wherein the minimum level of throughput and/or minimum network capacity is equal to X Mbit/s, wherein X is a positive rational number.

Optionally, when the RAN is configured to determine whether a change of the transmission is necessary, the RAN is configured to: determine, based on real-time location data of the UE and the signal coverage prediction information where the UE is located, that the UE is approaching a border of the area where the UE is located that has a decrease of performance which will fail to satisfy the required set of radio parameters that the application requires.

Optionally, when the RAN is configured to determine whether a change of the transmission is necessary, the RAN is configured to: assume that the UE will move within a predefined area from the current UE location; and determine based on the signal coverage prediction information where the UE is currently located, that within the predefined distance of the current UE location there will be an area with a decrease of performance which will fail to satisfy the required set of radio parameters that the application requires.

Optionally, when the RAN is configured to determine whether a change of the transmission is necessary, the RAN is configured to: receive, from the UE, a message comprising predefined area information indicating an area where the UE plans to use the application; and determine, based on the signal coverage prediction information and the predefined area information, that within the predefined area there will be an area with a decrease of performance which will fail to satisfy the required set of radio parameters that the application requires.

Optionally, changing the transmission to satisfy the required set of radio parameters by the application over the area where the UE is located further comprises the RAN being configured to change: a communication technology of the transmission including 2G, 3G, 4G and/or 5G; and/or a spectrum layer of the transmission comprising: 700 MHz, 800 MHz, 900 MHz, 1800 MHz, 2100 MHz, 2600 MHz, 3500 MHz; and/or a resource allocation of the transmission.

According to the present invention, a potential degradation of connectivity is already analyzed and identified before the degradation affects the user.

Furthermore, according to the present invention, potential countermeasures can be prepared, and a switch can be performed just-in-time before negative effects are recognized by the user.

Furthermore, according to the present invention, due to a defined benchmark of the applied service with regard to recommended throughput, the system can decide if such countermeasures have to be applied or if the service can still run, even if the change of local network performance changes in the predicted changing radio-conditions over the area, at the required level.

Other aspects, features, and advantages will be apparent from the summary above, as well as from the description that follows, including the figures and the claims.

### Brief description of the drawings

In the drawings:
- FIG. 1A: illustrates a UE located in a first available spectrum layer in an area in accordance with an embodiment of the present invention.
- FIG. 1B: illustrates a UE located in a second available spectrum layer in an area in accordance with an embodiment of the present invention.
- FIG. 1C: illustrates a UE located in a third available spectrum layer in an area in accordance with an embodiment of the present invention.
- FIG. 2: illustrates an exemplary flow chart of a method according to an embodiment of the invention.
- FIG. 3: illustrates different alternatives of how the determination step may be performed in accordance with a preferred embodiment of the invention.
- FIG. 4: illustrates different alternatives of the invention.

### Detailed description of the invention

In an embodiment of the present invention, there is provided a method and a system that makes use of a detailed coverage prediction combined with measures in order to keep a required performance level on a specified minimum range.

When starting a mobile application the application server sends an information to the supporting network with regard to the required radio parameters, in particular the lower level of throughput the application needs to provide sound results for the user. This is taken as benchmark for the network performance.

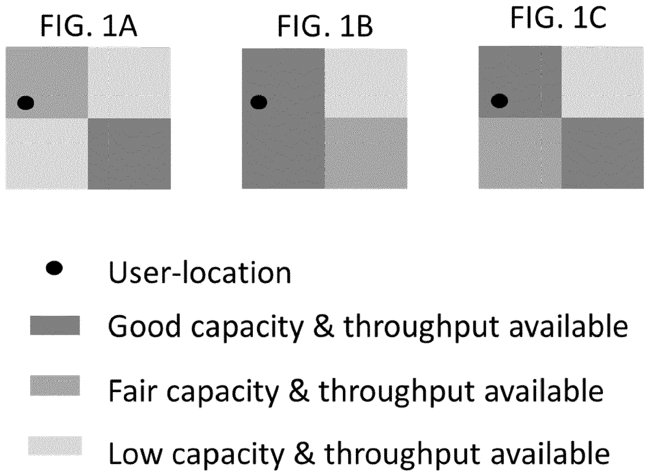

According to an embodiment of the invention, there is provided an example with a UE located in an area, where the area has three different available spectrum layers as depicted by FIG. 1A, 1B and 1C.

In detail, FIG. 1A, 1B and 1C illustrate a UE located in an area that has different capacities and throughputs available in each of the three respective spectrum layers. In particular, figures 1A, 1B and 1C show the signal coverage prediction information of the area available to the Radio Access Network (RAN), where the UE is located.

In the figures, the different levels of capacity and throughput are depicted with three different gray tones, where the low capacity and throughput is depicted with a light grey, the fair capacity and throughput is depicted with a medium grey, and the good capacity and throughput is depicted with a dark grey.

FIG. 1A illustrates the UE located in a sub-area of the first available spectrum layer in the area. This will be referred to as the default layer for login or idle mode. In Fig. 1A this is a sub-area providing a fair capacity and throughput. The sub-areas at the top-right and bottom left of Fig. 1A provide a low capacity and throughput, and the sub-area at the bottom right provides a good capacity and throughput. FIG. 1B illustrates the UE located in the second available spectrum layer in the area. FIG. 1C illustrates the UE located in the third available spectrum layer in the area.

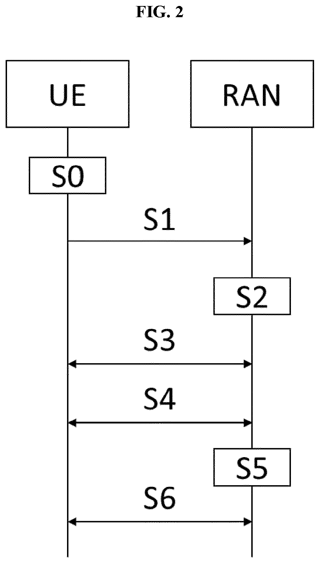

FIG. 2 illustrates an exemplary flow chart of a method for prediction-based radio parameters balancing in a wireless communication in a system according to an embodiment of the invention. The system comprises at least a UE and a RAN. Further, the UE comprises at least one mobile application.

In step S0, the UE starts an application that requires, for example, at least level of "Fair capacity & throughput" (as depicted with the medium gray in figures 1A, 1B and 1C).

It is noted that the invention is not limited to the scenario illustrated by figures 1A, 1B and 1C, i.e. an scenario that has three different capacities and throughputs available in each of the three respective spectrum layers. Rather, the number three has been chosen in this example for illustrative purposes. Thus, it is obvious that the number of available capacities, throughputs, available spectrum layers is not limited to three, but can be two, four, five, six, etc.

According to the state of the art, the RAN would provide a transmission between the UE and the RAN using the default layer for login or idle mode, namely the first available spectrum layer in the area as shown by FIG. 1A. However, if the UE would move to the area below or to the right, the transmission would be degraded to a level that has an insufficient capacity and throughput available.

In order to overcome the above problem, the method of the present invention comprises the following steps.

In step S1, the UE sends to the RAN location information of the UE. Furthermore, the UE also sends to the RAN a request for a set of radio parameters, as required by the application used or to be used on the UE by the user. In the current example, the request would contain information indicating that the application needs at least a level of "Fair capacity & throughput".

For example, the set of radio parameters required by the application may comprise information indicating minimum level of throughput, minimum network capacity, radio frequency layer, etc., that the application needs from the transmission in order to provide a minimum required performance.

For example, the minimum level of throughput may be defined as a level of Mbit/s which is available and performed for the data-transmission between UE and a Server over the RAN. For example, in Modern Agriculture, a remote operation may require at least 2 Mbit/s for uplink transmission. In this example, the operation would stop once the throughput falls under this benchmark.

In step S2, the RAN associates the received information from the UE (namely the location information and the requested set of radio parameters) with the information available to the RAN regarding signal coverage prediction of the area where the UE is located.

Based on all the above-mentioned available information at the RAN, in step S3, the RAN provides a transmission between the UE and the RAN which should be sufficient to keep the performance of the application over that area where the UE is located. In particular, the RAN provides the transmission that has a higher likelihood of satisfying the required set of radio parameters by the application over the area where the UE is located, without a decrease of Quality of Service (QoS) when the UE moves around.

Following the above example, the RAN would not choose the default layer 1, but rather would directly choose the second layer (as depicted by FIG. 1B) and then provide a transmission using a set of radio parameters in accordance with the chosen layer, since this would provide a higher likelihood that the application can run without a decrease of QoS when the UE moves around.

In step S4, the RAN continues to monitor and update the UE's location.

In step S5, the RAN determines, taking into account all the available information at the RAN including the updated location of the UE, whether a change of the transmission is necessary in order to satisfy the set of radio parameters required by the application.

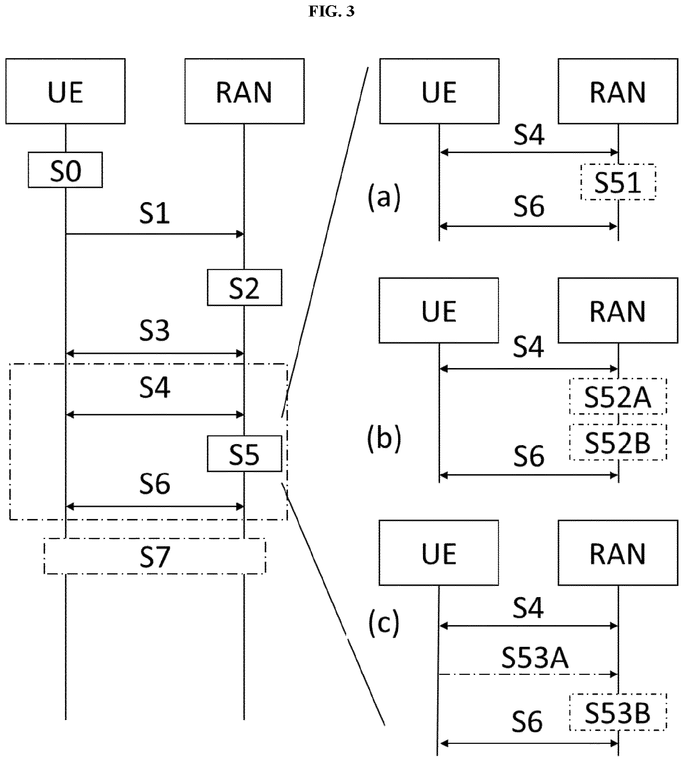

FIG. 3 illustrates different alternatives of how the determination step may be performed in accordance with a preferred embodiment.

In a preferred alternative (see FIG. 3 (a)), determining whether a change of the transmission is necessary may comprise a step S51 of determining that the UE is approaching a border of the area where the UE is located that has a decrease of performance which will fail to satisfy the required set of radio parameters that the application requires. To perform such determination, the RAN uses on real-time location data information of the UE and combines said information with the signal coverage prediction information.

In another preferred alternative (see FIG. 3 (b)), determining whether a change of the transmission is necessary may comprise a step S52A where the RAN assumes that the UE will move within a predefined area from the current UE location.

Furthermore, in step S52B, the RAN determines, based on the signal coverage prediction information where the UE is currently located, that within the predefined distance of the current UE location there will be an area with a decrease of performance which will fail to satisfy the required set of radio parameters that the application requires.

In another preferred alternative (see FIG. 3 (c)), determining whether a change of the transmission is necessary may comprise a receiving step S53A, by the RAN from the UE, of a message comprising predefined area information. Here, the predefined area information may indicate an area where the UE is planning to use the application.

Furthermore, in step S53B, the RAN determines, based on the signal coverage prediction information and the predefined area information, that within the predefined area there will be an area with a decrease of performance which will fail to satisfy the required set of radio parameters that the application requires.

In any case, regardless of how the RAN determines that a change of the transmission is necessary, if the RAN determines that a change of the transmission is necessary, the method further comprises the following steps.

In step S6, the RAN changes the transmission in order to satisfy the required set of radio parameters by the application over the area where the UE is located.

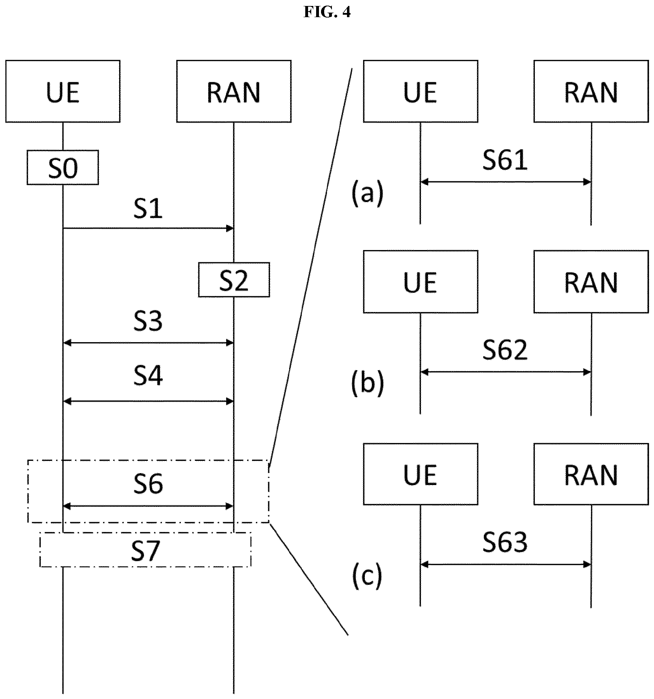

FIG. 4 shows three different possible changes of the transmission.

For example, changing the transmission to satisfy the required set of radio parameters by the application over the area where the UE is located may comprise a step S61 (see FIG. 4 (a)) of changing a communication technology of the transmission including 2G, 3G, 4G and/or 5G.

For example, changing the transmission to satisfy the required set of radio parameters by the application over the area where the UE is located may comprise a step S62 (see FIG. 4 (b)) of changing a spectrum layer of the transmission such as, for example, 700 MHz, 800 MHz, 900 MHz, 1800 MHz, 2100 MHz, 2600 MHz, 3500 MHz, etc.

For example, changing the transmission to satisfy the required set of radio parameters by the application over the area where the UE is located may comprise a step S63 (see FIG. 4 (c)) of changing a resource allocation of the transmission.

Furthermore, changing the transmission may also comprise performing more than one of steps S61, S62, S63 or all of them at the same time.

When a change of the transmission has been performed, the RAN may further comprise an additional step S7 of reverting the changed transmission to the previous transmission once the RAN determines that the previous transmission configuration already satisfies the required set of radio parameters by the application over the area where the UE is located.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for prediction-based radio parameters balancing in a wireless communication system, the system comprising a User Equipment, UE, and a radio access network, RAN, the UE comprising an application used or to be used by a user of the UE, the method comprising the steps of:
sending (S1), by the UE to the RAN, location information of the UE;
sending (S1), by the UE to the RAN, a request for a set of radio parameters required by the application;
associating (S2), by the RAN, the location information and the requested set of radio parameters with signal coverage prediction information of the area where the UE is located;
providing (S3), by the RAN, based on the above combined information, a transmission between the UE and the RAN that satisfies the required set of radio parameters by the application over the area where the UE is located;
monitoring and updating (S4), by the RAN, the location of the UE;
determining (S5), by the RAN, based on the above combined information including the updated location of the UE, whether a change of the transmission is necessary for satisfying the set of radio parameters required by the application; and
when the RAN determines that a change of the transmission is necessary:
changing (S6) the transmission to satisfy the required set of radio parameters by the application over the area where the UE is located.

2. The method of claim 1, further comprising:
reverting (S7), by the RAN, the changed transmission to the previous transmission once the RAN determines that the previous transmission configuration already satisfies the required set of radio parameters by the application over the area where the UE is located.

3. The method of claim 1 or 2, wherein the set of radio parameters required by the application comprises information indicating at least one of: minimum level of throughput; minimum network capacity; and/or radio frequency layer, that the application needs from the transmission for providing a minimum required performance.

4. The method of claim 3, wherein the minimum level of throughput and/or minimum network capacity is equal to X Mbit/s, wherein X is a positive rational number.

5. The method of any of the preceding claims, wherein determining (S5) whether a change of the transmission is necessary comprises determining (S51), based on real-time location data of the UE and the signal coverage prediction information where the UE is located, that the UE is approaching a border of the area where the UE is located that has a decrease of performance which will fail to satisfy the required set of radio parameters that the application requires.

6. The method of any of the preceding claims, wherein determining (S5) whether a change of the transmission is necessary comprises:
assuming (S52A), by the RAN, that the UE will move within a predefined area from the current UE location; and
determining (S52B), by the RAN, based on the signal coverage prediction information where the UE is currently located, that within the predefined distance of the current UE location there will be an area with a decrease of performance which will fail to satisfy the required set of radio parameters that the application requires.

7. The method of any of the preceding claims, wherein determining (S5) whether a change of the transmission is necessary comprises:
receiving (S53A), by the RAN from the UE, a message comprising predefined area information indicating an area where the UE plans to use the application; and
determining (S53B), by the RAN, based on the signal coverage prediction information and the predefined area information, that within the predefined area there will be an area with a decrease of performance which will fail to satisfy the required set of radio parameters that the application requires.

8. The method of any of the preceding claims, wherein changing (S6) the transmission to satisfy the required set of radio parameters by the application over the area where the UE is located comprises at least one of:
changing (S61) a communication technology of the transmission including 2G, 3G, 4G and/or 5G; and/or
changing (S62) a spectrum layer of the transmission comprising: 700 MHz, 800 MHz, 900 MHz, 1800 MHz, 2100 MHz, 2600 MHz, 3500 MHz; and/or
changing (S63) a resource allocation of the transmission.

9. A wireless communication system for prediction-based radio parameters balancing, the system comprising a User Equipment, UE, and a radio access network, RAN, the UE comprising an application used or to be used by a user of the UE, wherein:
the UE is configured to:
send, to the RAN, location information of the UE;
send, to the RAN, a request for a set of radio parameters required by the application;
the RAN is configured to:
associate the location information and the requested set of radio parameters with signal coverage prediction information of the area where the UE is located;
provide, based on the above combined information, a transmission between the UE and the RAN that satisfies the required set of radio parameters by the application over the area where the UE is located;
monitor and update, the location of the UE;
determine, based on the above combined information including the updated location of the UE, whether a change of the transmission is necessary for satisfying the set of radio parameters required by the application; and
when the RAN determines that a change of the transmission is necessary, the RAN is further configured to:
change the transmission to satisfy the required set of radio parameters by the application over the area where the UE is located.

10. The system of claim 9, the RAN being further configured to:
revert the changed transmission to the previous transmission once the RAN determines that the previous transmission configuration already satisfies the required set of radio parameters by the application over the area where the UE is located.

11. The system of claim 9 or 10, wherein the set of radio parameters required by the application comprises information indicating at least one of: minimum level of throughput; minimum network capacity; and/or radio frequency layer, that the application needs from the transmission for providing a minimum required performance,
preferably wherein the minimum level of throughput and/or minimum network capacity is equal to X Mbit/s, wherein X is a positive rational number.

12. The system of any of the preceding claims, wherein when the RAN is configured to determine whether a change of the transmission is necessary, the RAN is configured to:
determine, based on real-time location data of the UE and the signal coverage prediction information where the UE is located, that the UE is approaching a border of the area where the UE is located that has a decrease of performance which will fail to satisfy the required set of radio parameters that the application requires.

13. The system of any of the preceding claims, wherein when the RAN is configured to determine whether a change of the transmission is necessary, the RAN is configured to:
assume that the UE will move within a predefined area from the current UE location; and
determine based on the signal coverage prediction information where the UE is currently located, that within the predefined distance of the current UE location there will be an area with a decrease of performance which will fail to satisfy the required set of radio parameters that the application requires.

14. The system of any of the preceding claims, wherein when the RAN is configured to determine whether a change of the transmission is necessary, the RAN is configured to:
receive, from the UE, a message comprising predefined area information indicating an area where the UE plans to use the application; and
determine, based on the signal coverage prediction information and the predefined area information, that within the predefined area there will be an area with a decrease of performance which will fail to satisfy the required set of radio parameters that the application requires.

15. The system of any of the preceding claims, wherein changing the transmission to satisfy the required set of radio parameters by the application over the area where the UE is located comprises the RAN being configured to change:
a communication technology of the transmission including 2G, 3G, 4G and/or 5G; and/or
a spectrum layer of the transmission comprising: 700 MHz, 800 MHz, 900 MHz, 1800 MHz, 2100 MHz, 2600 MHz, 3500 MHz; and/or
a resource allocation of the transmission.

## Amended claims

### Amended claims in accordance with Rule 137(2) EPC.

1. A method for prediction-based radio parameters balancing in a wireless communication system, the system comprising a User Equipment, UE, and a radio access network, RAN, the UE comprising an application used or to be used by a user of the UE, the method comprising the steps of:
sending (51), by the UE to the RAN, location information of the UE;
sending (51), by the UE to the RAN, a request for a set of radio parameters required by the application;
associating (S2), by the RAN, the location information and the requested set of radio parameters with signal coverage prediction information of the area where the UE is located;
providing (S3), by the RAN, based on the above combined information, a transmission between the UE and the RAN that satisfies the required set of radio parameters by the application over the area where the UE is located;
monitoring and updating (S4), by the RAN, the location of the UE;
determining (S5), by the RAN, based on the above combined information including the updated location of the UE, whether a change of the transmission is necessary for satisfying the set of radio parameters required by the application; and
when the RAN determines that a change of the transmission is necessary:
changing (S6) the transmission to satisfy the required set of radio parameters by the application over the area where the UE is located, wherein the changing (S6) of the transmission comprises at least one of:
changing (S61) a communication technology of the transmission including 2G, 3G, 4G and/or 5G; and/or
changing (S62) a spectrum layer of the transmission comprising: 700 MHz, 800 MHz, 900 MHz, 1800 MHz, 2100 MHz, 2600 MHz, 3500 MHz; and/or
changing (S63) a resource allocation of the transmission.

2. The method of claim 1, further comprising:
reverting (S7), by the RAN, the changed transmission to the previous transmission once the RAN determines that a previous transmission configuration already satisfies the required set of radio parameters by the application over the area where the UE is located.

3. The method of claim 1 or 2, wherein the set of radio parameters required by the application comprises information indicating at least one of: minimum level of throughput; minimum network capacity; and/or radio frequency layer, that the application needs from the transmission for providing a minimum required performance.

4. The method of claim 3, wherein the minimum level of throughput and/or minimum network capacity is equal to X Mbit/s, wherein X is a positive rational number.

5. The method of any of the preceding claims, wherein determining (S5) whether a change of the transmission is necessary comprises determining (S51), based on real-time location data of the UE and the signal coverage prediction information where the UE is located, that the UE is approaching a border of the area where the UE is located that has a decrease of performance which will fail to satisfy the required set of radio parameters that the application requires.

6. The method of any of the preceding claims, wherein determining (S5) whether a change of the transmission is necessary comprises:
assuming (S52A), by the RAN, that the UE will move within a predefined area from the current UE location; and
determining (S52B), by the RAN, based on the signal coverage prediction information where the UE is currently located, that within the predefined distance of the current UE location there will be an area with a decrease of performance which will fail to satisfy the required set of radio parameters that the application requires.

7. The method of any of the preceding claims, wherein determining (S5) whether a change of the transmission is necessary comprises:
receiving (S53A), by the RAN from the UE, a message comprising predefined area information indicating an area where the UE plans to use the application; and
determining (S53B), by the RAN, based on the signal coverage prediction information and the predefined area information, that within the predefined area there will be an area with a decrease of performance which will fail to satisfy the required set of radio parameters that the application requires.

8. A wireless communication system for prediction-based radio parameters balancing, the system comprising a User Equipment, UE, and a radio access network, RAN, the UE comprising an application used or to be used by a user of the UE, wherein:
the UE is configured to:
send, to the RAN, location information of the UE;
send, to the RAN, a request for a set of radio parameters required by the application;
the RAN is configured to:
associate the location information and the requested set of radio parameters with signal coverage prediction information of the area where the UE is located;
provide, based on the above combined information, a transmission between the UE and the RAN that satisfies the required set of radio parameters by the application over the area where the UE is located;
monitor and update, the location of the UE;
determine, based on the above combined information including the updated location of the UE, whether a change of the transmission is necessary for satisfying the set of radio parameters required by the application; and
when the RAN determines that a change of the transmission is necessary, the RAN is further configured to:
change the transmission to satisfy the required set of radio parameters by the application over the area where the UE is located, wherein the change of the transmission comprises the RAN being configured to change:
a communication technology of the transmission including 2G, 3G, 4G and/or 5G; and/or
a spectrum layer of the transmission comprising: 700 MHz, 800 MHz, 900 MHz, 1800 MHz, 2100 MHz, 2600 MHz, 3500 MHz; and/or
a resource allocation of the transmission.

9. The system of claim 8, the RAN being further configured to:
revert the changed transmission to the previous transmission once the RAN determines that a previous transmission configuration already satisfies the required set of radio parameters by the application over the area where the UE is located.

10. The system of claim 8 or 9, wherein the set of radio parameters required by the application comprises information indicating at least one of: minimum level of throughput; minimum network capacity; and/or radio frequency layer, that the application needs from the transmission for providing a minimum required performance,
preferably wherein the minimum level of throughput and/or minimum network capacity is equal to X Mbit/s, wherein X is a positive rational number.

11. The system of any of the preceding claims, wherein when the RAN is configured to determine whether a change of the transmission is necessary, the RAN is configured to:
determine, based on real-time location data of the UE and the signal coverage prediction information where the UE is located, that the UE is approaching a border of the area where the UE is located that has a decrease of performance which will fail to satisfy the required set of radio parameters that the application requires.

12. The system of any of the preceding claims, wherein when the RAN is configured to determine whether a change of the transmission is necessary, the RAN is configured to:
assume that the UE will move within a predefined area from the current UE location; and
determine based on the signal coverage prediction information where the UE is currently located, that within the predefined distance of the current UE location there will be an area with
